(19) **Europäisches Patentamt** / **European Patent Office** / **Office européen des brevets**

(11) **EP 4 513 452 B1**

(12) # EUROPEAN PATENT SPECIFICATION

(45) Date of publication and mention of the grant of the patent:
**22.04.2026  Bulletin 2026/17**

(21) Application number: **24191324.3**

(22) Date of filing: **29.07.2024**

(51) International Patent Classification (IPC):
*G06V 20/62* (2022.01)

(52) Cooperative Patent Classification (CPC):
**G06V 20/62**; G06V 2201/02

(54) **SYSTEMS AND METHODS FOR VISION-BASED MEASUREMENT OF LIQUID LEVEL IN CONTAINERS HAVING LINEAR SCALES**

SYSTEME UND VERFAHREN ZUR SICHTBASIERTEN MESSUNG DES FLÜSSIGKEITSSTANDS IN BEHÄLTERN MIT LINEARMASSSTAB

SYSTÈMES ET PROCÉDÉS DE MESURE VISUELLE DU NIVEAU DE LIQUIDE DANS DES RÉCIPIENTS AYANT DES ÉCHELLES LINÉAIRES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **21.08.2023  IN 202321055988**

(43) Date of publication of application:
**26.02.2025  Bulletin 2025/09**

(73) Proprietor: **Tata Consultancy Services Limited Maharashtra (IN)**

(72) Inventors:
• **SAINI, PARVESH**
  **411057 Pune, Maharashtra (IN)**
• **SOUMYADIPTA, MAITI**
  **411057 Pune, Maharashtra (IN)**
• **BEENA, RAI**
  **411057 Pune, Maharashtra (IN)**

(74) Representative: **Goddar, Heinz J.**
  **Boehmert & Boehmert**
  **Anwaltspartnerschaft mbB**
  **Pettenkoferstrasse 22**
  **80336 München (DE)**

(56) References cited:
• **DOU GANG ET AL: "Research on Water-Level Recognition Method Based on Image Processing and Convolutional Neural Networks", WATER, vol. 14, no. 12, 12 June 2022 (2022-06-12), CH, pages 1890, XP093238676, ISSN: 2073-4441, DOI: 10.3390/w14121890**
• **KISSOS IDO ET AL: "OCR Error Correction Using Character Correction and Feature-Based Word Classification", 2016 12TH IAPR WORKSHOP ON DOCUMENT ANALYSIS SYSTEMS (DAS), IEEE, 11 April 2016 (2016-04-11), pages 198 - 203, XP032911502, [retrieved on 20160610], DOI: 10.1109/DAS.2016.44**
• **HUA CHENQUAN ET AL: "Follow-Up Control and Image Recognition of Neck Level for Standard Metal Gauge", APPLIED SCIENCES, vol. 10, no. 18, 22 September 2020 (2020-09-22), pages 6624, XP093239039, ISSN: 2076-3417, DOI: 10.3390/app10186624**
• **BOBOVNIK GREGOR ET AL: "Liquid Level Detection in Standard Capacity Measures with Machine Vision", SENSORS, vol. 21, no. 8, 10 April 2021 (2021-04-10), CH, pages 2676, XP093239031, ISSN: 1424-8220, DOI: 10.3390/s21082676**

**Description**

CROSS-REFERENCE TO RELATED APPLICATIONS AND PRIORITY

The present application claims priority to Indian application no. 202321055988, filed on August 21, 2023.

TECHNICAL FIELD

The disclosure herein generally relates to liquid level measurement techniques, and, more particularly, to systems and methods for vision-based measurement of liquid level in containers having linear scales.

BACKGROUND

Mechanical methods of measuring linear position over a scale require physical coupling with system(s), such as potentiometer-based feedback etc. Such kinds of mechanical feedback mechanisms need geared coupling. And along with a mechanical system comes problems of wear and tear of parts which can lead to increased inaccuracy of the setup over time. DOU GANG ET AL: "Research on Water-Level Recognition Method Based on Image Processing and Convolutional Neural Networks", describes a water level recognition method based on digital image processing technology and CNN. For achieving batch segmentation of source images, the coordinates of the water ruler region in the source image and characters' region and the scale lines' region on the ruler are obtained by using image processing algorithms such as grayscale processing, edge detection, and the tilt correction method based on Hough-transform and morphological operations. The CNN is then used to identify the value of digital characters. Finally, the water level value is calculated according to the mathematical relationship between the number of scale lines detected by pixel traversal in the binarized image and the value of digital characters (*Abstract*). Further, KISSOS IDO ET AL: "OCR Error Correction Using Character Correction and Feature-Based Word Classification", describes an OCR post-correction technique based on a composite machine-learning classification. The method applies a lexical spellchecker and potentially corrects single-error misspellings and a certain class of double-error misspellings, which are the major source of inaccurate recognitions in most OCR use-cases. The method has the ability to take into consideration several valuable word features, each giving additional information for a possible spelling correction. It is built out of two consecutive stages: 1) word expansion based on a confusion matrix, and 2) word selection by a regression model based on word features. The confusion matrix and regression model are built from a transcribed set of images, while the word features rely on a language model built from a large publicly available textual dataset. Accordingly, the technique explores the use of a learned classifier for post-OCR text correction (*Abstract and Section* 1). Furthermore, HUA CHENQUAN ET AL: "Follow-Up Control and Image Recognition of Neck Level for Standard Metal Gauge", discloses an image recognition technique for determining optimal neck levels for standard metal gauges, in the process of validating pipe provers. A camera-level follow-up control system was designed to achieve automated tracking of fluid levels by a camera, thereby preventing errors from inclined viewing angles. An orange background plate was placed behind the tube to reduce background interference, and highlight scale numbers/lines and concave meniscus. A segmentation algorithm, based on edge detection and K-means clustering, was used to segment indicator tubes and scales in the acquired images. The concave meniscus reconstruction algorithm and curve-fitting algorithm were proposed to better identify the lowest point of the meniscus. A characteristic edge detection model was used to identify centimeter-scale lines corresponding to the meniscus. A binary tree multiclass support vector machine (MCSVM) classifier was then used to identify scale numbers corresponding to scale lines and determine the optimal neck level for standard metal gauges (*Abstract*).

SUMMARY

Embodiments of the present disclosure present technological improvements as solutions to one or more of the above-mentioned technical problems recognized by the inventors in conventional systems. The invention is set out in appended set of claims.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 depicts an exemplary system for a vision-based measurement of liquid level in containers having linear scales, in accordance with an embodiment of the present disclosure.

FIG. 2 depicts an exemplary flow chart illustrating a method for a vision-based measurement of liquid level in containers having linear scales, using the system of FIG. 1, in accordance with an embodiment of the present disclosure.

FIG. 3 depicts an exemplary container having linear scales as used by the system of FIG. 1 for the vision-based measurement of liquid level comprised therein, in accordance with an embodiment of the present disclosure.

FIG. 4 depicts a color-based image segmentation of the container with one or more relevant parts (also referred to as masked portions), in accordance with an embodiment of the present disclosure.

FIG. 5 depicts closed contours along with their properties, in accordance with an embodiment of the present disclosure.

FIG. 6 depicts containers with different liquid level indicators detected as (a) Plug, and (b) Meniscus, in accordance with an embodiment of the present disclosure.

FIG. 7A depicts the container and associated major markers being separated and shown in a masked version, in accordance with an embodiment of the present disclosure.

FIG. 7B depicts the container with major markers detected successfully for different scale, (a) 0.6, and (b) 1.5 of a segmented image (relative marker identification), in accordance with an embodiment of the present disclosure.

FIG. 8 depicts read digits shown with corresponding markers along with masked version, in accordance with an embodiment of the present disclosure.

FIG. 9 depicts the container with auto-corrected level digits (values) shown alongside misread values by the Optical Character Recognition (OCR) technique as implemented by the system of FIG. 1, in accordance with an embodiment of the present disclosure.

FIG. 10 depicts a calculated value of liquid level based on a position of the liquid level identifier (e.g., plug position) in the container, in accordance with an embodiment of the present disclosure.

FIG. 11 depicts a graphical representation illustrating a comparison for reading from manual versus vision-based measurement of syringe plug, in accordance with an embodiment of the present disclosure.

FIG. 12 depicts a graphical representation illustrating a comparison for manual versus vision-based measurement of liquid surface meniscus, in accordance with an embodiment of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts.

As mentioned, mechanical methods of measuring linear position over a scale require physical coupling with system(s), such as potentiometer-based feedback etc. Such kinds of mechanical feedback mechanisms need geared coupling. Along with a mechanical system comes problems of wear and tear of parts which can lead to increased inaccuracy of the setup over time. With increased capabilities of computer vision-based techniques, a non-contact image-based measurement of linear position has become of prime importance. Embodiments of the present disclosure provide system and method that implement direct visual measurement of liquid level inside a linear measurement setup (syringe here) by employing various techniques such as computer vision, machine learning techniques, and the like, wherein various features are extracted that in turn allow to have a measurement of a liquid level identified or indicator (plug/meniscus) position in a syringe/container.

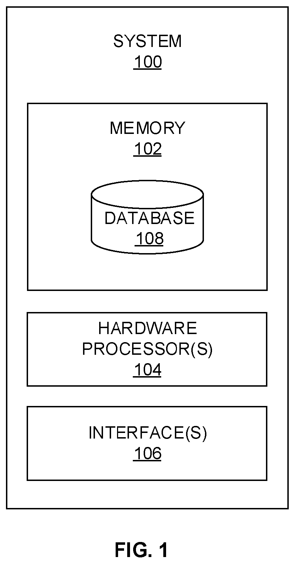

Referring now to the drawings, and more particularly to FIGS. 1 through 12, where similar reference characters denote corresponding features consistently throughout the figures, there are shown preferred embodiments and these embodiments are described in the context of the following exemplary system and/or method.

FIG. 1 depicts an exemplary system 100 for a vision-based measurement of liquid level in containers having linear scales, in accordance with an embodiment of the present disclosure. In an embodiment, the system 100 may also referred as 'measurement system' and may be interchangeably used herein after. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises information pertaining to RGB images captured from image/video capturing devices, wherein the RGB images captured pertain to containers having linear scales, and the like. The database 108 further comprises information pertaining to pre-processed images, segmented images, closed contours being detected, liquid level identifier present in the container, linear features, non-linear features extracted therebetween, various markers (major, minor markers, etc.), liquid level value, and the like. The memory 102 comprises various techniques as known in the art to enable the system 100 to perform the method of the present disclosure. For instance, the various techniques include but are not limited to, pre-processing technique, color-based image segmentation technique, closed contour detection technique(s), regression-based straight line fitting technique(s), feature extraction technique(s), marker identification technique(s), optical character recognition (OCR) technique(s), integer value identification technique, liquid level value identification technique(s), and the like. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

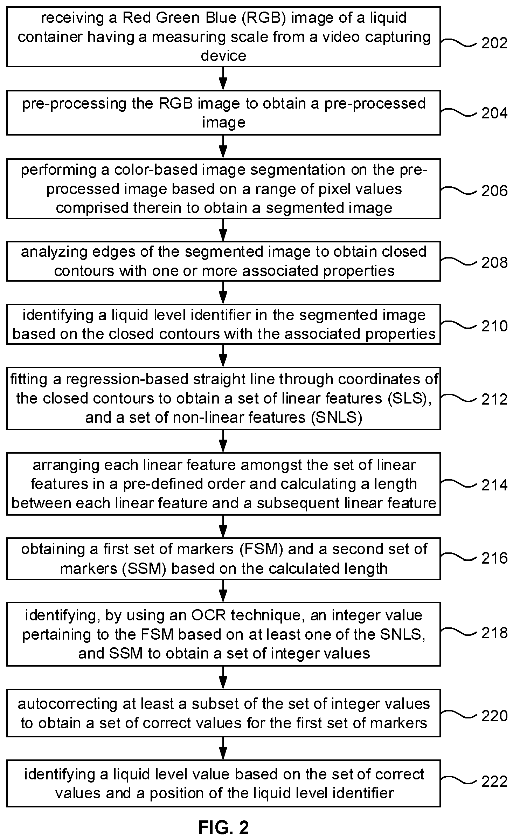

FIG. 2, with reference to FIG. 1, depicts an exemplary flow chart illustrating a method for a vision-based measurement of liquid level in containers having linear scales, using the system 100 of FIG. 1, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIG. 1, and the flow diagram as depicted in FIG. 2. Although steps of the method of FIG. 2 including process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

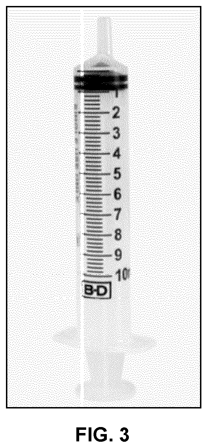

At step 202 of the method of the present disclosure, the one or more hardware processors 104 receive a Red Green Blue (RGB) image of a liquid container having a measuring scale from a video capturing device. At step 204 of the method of the present disclosure, the one or more hardware processors 104 pre-process the RGB image to obtain a pre-processed image. With increased capabilities of computer vision-based techniques, it is now possible to have a non-contact image-based measurement of linear position. In the present disclosure, the system 100 and the method 100 perform a direct visual measurement of level inside a linear measurement setup (e.g., a syringe here) is tried using various techniques such as computer vision, machine learning techniques, and the like. This is done by performing a series of steps, which were used to extract various features that in turn allow the system 100 and method to have a measurement of a level indicator (plug) position in the syringe. One or more frames from a video live feed from a camera (e.g., image/video capturing device) is read in form of the RGB image, container such as syringe is depicted in FIG. 3 (refer step 202). Other examples of containers include, liquid bottles, or packages/cans containing liquid and having linear scales. The first preprocessing operation is carried out wherein the conversion of the color space from RGB to BGR. BGR is essentially in reverse of RGB and with no adverse effect on color vibrancy and accuracy. Then Gaussian blur is applied to the RGB image/frame which helps in reducing noise and results in smoother edges to help in edge detection algorithms (stored in the memory 102 and invoked for execution accordingly). More specifically, FIG. 3, with reference to FIGS. 1 through 2, depicts an exemplary container having linear scales as used by the system 100 of FIG. 1 for the vision-based measurement of liquid level comprised therein, in accordance with an embodiment of the present disclosure.

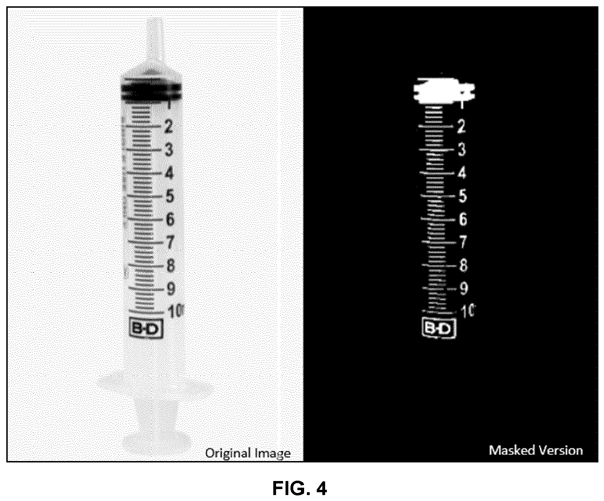

Once the pre-processed image is obtained, at step 206 of the method of the present disclosure, the one or more hardware processors 104 perform a color-based image segmentation on the pre-processed image based on a range of pixel values comprised therein to obtain a segmented image. More specifically, the color-based image segmentation involves extracting one or more relevant parts of the pre-processed image, such as markings (or also referred as markers and may be interchangeably used herein), plunger profiles as depicted in FIG. 4. More specifically, FIG. 4, with reference to FIGS. 1 through 3, depicts a color-based image segmentation of the container with one or more relevant parts (also referred to as masked portions), in accordance with an embodiment of the present disclosure.

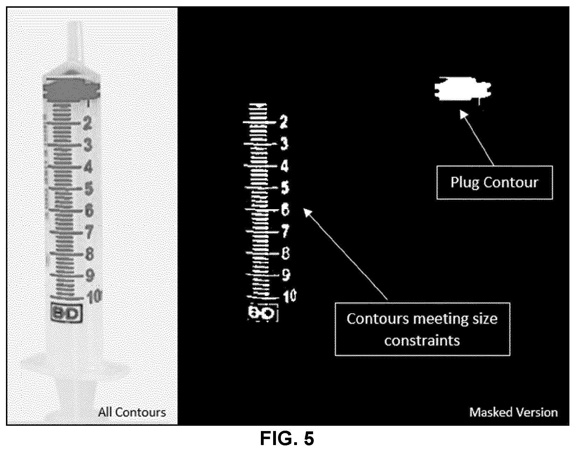

Once the segmented image is obtained, at step 208 of the method of the present disclosure, the one or more hardware processors 104 analyze one or more edges of the segmented image to obtain one or more closed contours with one or more associated properties. In an embodiment, the system 100 and the method employ or execute one or more contour detection algorithms as known in the art for contour detection and/or edge detection. More specifically, the relevant parts (or masked portions) of the segmented image are passed through a contour finding algorithm (stored in the memory 102 and invoked for execution), which analyzes the one or more edges of the segment image and lists all the closed contours detected in the image. FIG. 5, with reference to FIGS. 1 through 4, depicts closed contours along with their properties, in accordance with an embodiment of the present disclosure. In the present disclosure, the one or more associated properties of the one or more closed contours, include, but are not limited to, an associated area, one or more coordinates, one or more perimeters, etc. These properties are then used to separate out different elements of the segmented image like plug and level markers using conditions such as area constraint.

At step 210 of the method of the present disclosure, the one or more hardware processors 104 identify a liquid level identifier in the segmented image based on the one or more closed contours with the one or more associated properties. In the present disclosure, the liquid level identifier is at least one of a rubber plug, a meniscus, and a floating object.

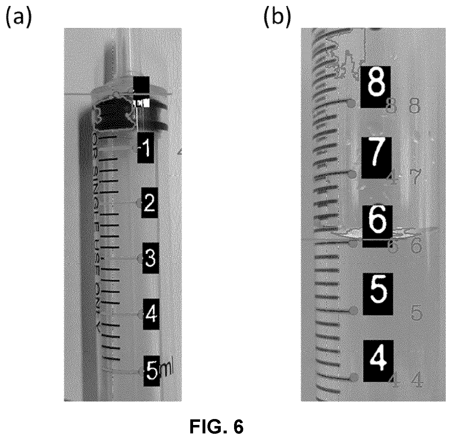

To measure readings from a linear scale, locating liquid level indicator is of great importance. To find a location of the liquid level indicator, type of liquid level identifier present is identified which could be either plug or meniscus. To identify the type of liquid level indicator/identifier, the system 100 and the method described herein perform a plug check on the mask, generated using pixel bound technique and then perform contour determination. If no contour of similar size is found, then plug presence is considered false and the system 100 proceeds with meniscus check. For checking meniscus presence same method is used but with properties (e.g., say pixel bound and size) of the meniscus. FIGS. 6A and 6B (or FIGS. 6(a and b), with reference to FIG. 5, (collectively referred to as FIG. 6) depict containers with different liquid level indicators detected as (a) Plug, and (b) Meniscus, in accordance with an embodiment of the present disclosure.

At step 212 of the method of the present disclosure, the one or more hardware processors 104 fit a regression-based straight line through one or more coordinates of the one or more closed contours to obtain a set of linear features and a set of non-linear features. Among level markers there are two types of contours, one that belongs to level lines and the other to level digits. Therefore, a step involving regression-based straight-line fitting through the contour coordinates has been carried out the system 100 and the method to differentiate between linear and non-linear features. Contours below mean squared error values threshold of say 'x' (wherein value of 'x' is 6) are considered linear, and others are considered non-linear. Root Mean Square Error (RMSE) was calculated using the following formula.

$$RMSE = \sqrt{\frac{\sum(y_i - \hat{y}_i)^2}{n}}$$

where $y_i$ is the actual value at $x_i$ coordinate and $\hat{y}_i$ is the value calculated at $x_i$ using the following expression.

$$\hat{y}_i = m\_contour * x_i + c\_contour$$

The values of *m_contour* and *c_contour* (fitted parameters) were obtained using regression technique.

The following Table 1 contains this RMSE calculation for three example contours along with their classification based on that.

Table 1

| Contour Index | RMSE | Classification |
|---------------|------|----------------------|
| 0 | 4 | Linear (RSME < 6) |
| 1 | 8 | Non-linear (RSME > 6) |
| 2 | 2 | Linear (RSME < 6) |

In the example above, all the contours (or indicated by contour index) with RMSE value less than 6 are considered as linear features and all above 6 as non-linear features.

At step 214 of the method of the present disclosure, the one or more hardware processors 104 arrange each linear feature amongst the set of linear features in a pre-defined order and calculate a length between each linear feature and a subsequent linear feature. At step 216 of the method of the present disclosure, the one or more hardware processors 104 obtain a first set of markers (e.g., say major markers) and a second set of markers (e.g., say minor markers) based on the calculated length. The steps 214 and 216 are better understood by way of following description:

Depending on a distance from the image/video capturing device (e.g., camera), contours can appear to be of different sizes in the Red Green Blue (RGB) image (or the pre-processed image/the segmented image). So, to separate out contours of major markers, a relative classification approach (classification method as known in the art) was chosen by the system 100 and method. In this all the linear contours found were arranged in the order of decreasing length (e.g., the pre-defined order) and jump in length of consecutive contours were calculated wherein contours are referred to as collection of coordinates of which length is calculated. Below Table 2 depicts contours (index) arranged in the decreasing order of their lengths, along with the consecutive jump (percentage to previous length) in length. Now, if the jump is more than set value, 15% here, new group is created.

Table 2

| Linear Contour S.no | Length | Percentage Jump | Classification |
|---|---|---|---|
| 0 | 73 | - | Major marker |
| 5 | 72 | 1.36 | Major marker |
| 15 | 68 | 5.55 | Major marker |
| 20 | 66 | 2.29 | Major marker |
| 10 | 31 | 19.0 | Minor marker (Group changed because jump is more than 15%) |
| 12 | 31 | 0 | Minor marker |
| 14 | 30 | 1.15 | Minor marker |

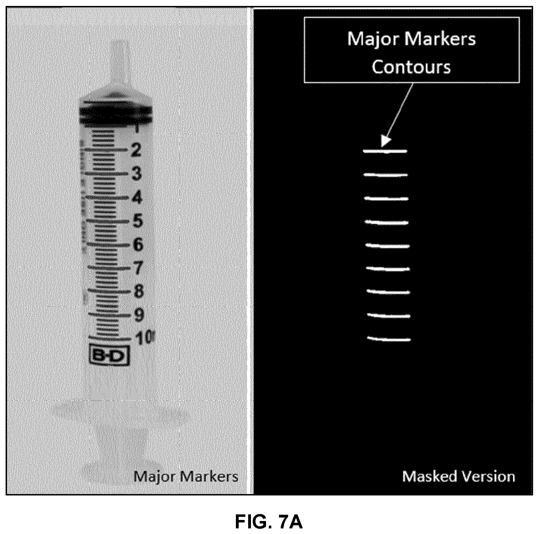

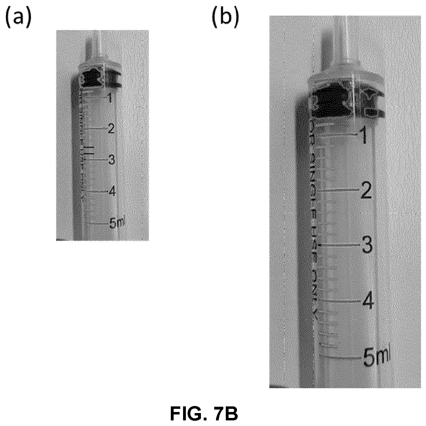

The contours based on the relative lengths are grouped together. In the present disclosure, the grouping is done by checking whether the calculated jump is more than p% (e.g., say p=15%) of the length of the last contour, then a new group is created. This results in separate groups consisting of major and minor markers, major being the first one due to sorting. Then all the contours in the first group are passed for further processing as contours of the major markers. FIG. 7A, with reference to FIGS. 1 through 6B, depicts the container and associated major markers being separated and shown in a masked version, in accordance with an embodiment of the present disclosure. FIG. 7B, with reference to FIGS. 1 through 7A, depicts the container with major markers detected successfully for different scale, (a) 0.6, and (b) 1.5 of the segmented image (relative marker identification), in accordance with an embodiment of the present disclosure.

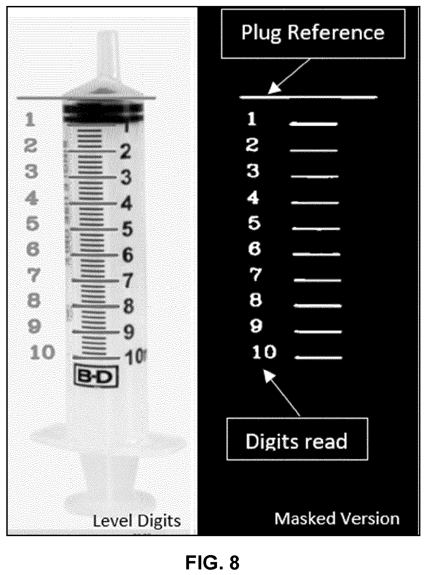

At step 218 of the method of the present disclosure, the one or more hardware processors 104 identify, by using an Optical Character Recognition (OCR) technique (as known in the art such as Tesseract - an optical character recognition engine for various operating systems), an integer value pertaining to each marker from the first set of markers based on at least one of the set of non-linear features and the second set of markers to obtain a set of integer values. Once contours corresponding to the level digits are identified based on contour linearity check, these need to be read for their corresponding values. This task is done by cropping a nearby portion of the segmented image. Now this cropped portion of the segmented image is passed through the Optical Character Recognition (OCR) technique. Here, Tesseract OCR as known in the art is used by the system 100 and the method that gives the corresponding integer value, and then the integer value is associated with a nearest linear level marker. Read digits can be seen written along major markers FIG. 8. More specifically, FIG. 8, with reference to FIGS. 1 through 7B, depicts read digits shown with corresponding markers along with masked version, in accordance with an embodiment of the present disclosure.

At step 220 of the method of the present disclosure, the one or more hardware processors 104 autocorrect at least a subset of set of integer values to obtain a set of correct values for the first set of markers. More specifically, during autocorrection, the system 100 and the method first form one or more combinations of the set of integer values. A slope is then calculated for each combination amongst the one or more combinations. Further, the system 100 determines number of combinations having a matching slope to obtain the set of correct values and the same is stored in a list. In this list the most repeated (mode) slope value is then found out, which is the correct value of slope in the linear relationship of value and position. The offset of the linear relationship can be further calculated using any of the points having correct slope. For example, if the most repeated (mode) slope value is 0.10, thus the correct slope. Now, using any point from the combinations, where slope is correct, offset in the linear relation $\{y = slope*x + offset\}$ is determined for the frame. Using this relation, the points which gave the incorrect values for the slope due to incorrect OCR reading are replaced with the correct value (correct y values) as the positions (x values) of those points are known. For each incorrect value, the system 100 further determines a correct value. The incorrect value identified is based on a linear relationship of the set of correct values associated with the first set of markers (major markers). The above step 220 of autocorrection and its sub-steps may be better understood by way of following description:

Digits read by OCR are not read correctly all the time and can have misread values. These misread values can lead to incorrect measured reading, which in turn can affect the controls of the system 100 or any other system(s) connected to (or integrated with) the system 100. Therefore, an autocorrection is needed to detect and correct misread values. To do this the position (from co-ordinates of the major marker contours) and value (read using OCR) of the digits are read and converted into pairs. All possible combinations of points such as position of major marker, OCR read integers were generated as a list using the "COMBINATIONS" method in python, which took all points as input and generated a list of all possible pairs from it. For example, if a total of 4 points are available with index {0, 1, 2, 3, 4}, combinations would be {(0, 1), (0, 2), (0, 3), (1, 2), (1, 3), (2, 3)}, where each index pertains to a representation of a point (say a position of a linear feature (e.g., major marker), a value at that feature/major marker). And for each pair of data points (e.g., say (x1, y1), (x2, y2)) slopes are calculated using formula {(y2 - y1)/(x2 - x1)} and rounded off, accordingly. This slope value is noted along with the pair for which it is calculated in form of a matrix, in an embodiment of the present disclosure. In this list of slopes, mode (most occurring value) is calculated for the correct slope, as most of the combination being in a linear relationship would be giving same values except the ones having incorrectly read OCR value. Now, based on the combinations which have the matching slope, correct values were listed, and wrong ones were rejected. For example, Table 3 depicts combinations of points and their corresponding slope value. The most repeated value of the slope here is 0.10 thus the correct slope. Thus, the combinations where slope values are 0.10 are classified as Correct and others as Incorrect.

Table 3

| Combination (index of markers) | Slope {(y2 - y1)/(x2 - x1)} and rounded off | Classification |
|---|---|---|
| (0, 1) | 0.10 | Correct |
| (0, 2) | 0.20 | Incorrect |
| (0, 3) | 0.10 | Correct |
| (1, 2) | 0.30 | Incorrect |
| (1, 3) | 0.10 | Correct |
| (2, 3) | 0.00 | Incorrect |

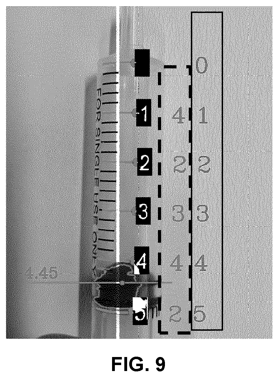

Using these correct values, a linear relationship of position and value was calculated. And by using this linear relationship, correct values corresponding to all the incorrect values, were determined, and replaced accordingly. FIG. 9, with reference to FIGS. 1 through 8, depicts the container with auto-corrected level digits (values) shown alongside misread values by the Optical Character Recognition (OCR) technique as implemented by the system 100 of FIG. 1, in accordance with an embodiment of the present disclosure. In FIG. 9, the digits/values read by the OCR technique are depicted in broken line property, and the corrected values in solid line property. OCR technique is required to make systems such as computer systems understand or read the image of a digit, which is written beside/nearby every major marker. Without this capability, the computing/computer systems would not know which major maker represents what value. As fixed distance or fixed syringe setup is not used in the present disclosure, a fixed distance is not possible to volume relation. Thus, the system 100 needs to calculate this on its own. To calculate this relation, the system 100 needs to know at what location of major marker (calculated separately using contour analysis) what volume value is present. For this, the OCT technique when applied needs to provide the "value" (e.g., 2ml or 4 ml) for each major marker position. Using this obtained data of marker position and its value (read using OCR), the system 100 determines a relation between the position and the value. This relation is needed to get the reading (volume measurement) corresponding to the location of liquid level indicator/identifier (plug in this case). After the relation is obtained, the system 100 can directly determine volume reading corresponding to the liquid level indicator location (found separately). The method of the present disclosure implements various techniques for locating markers and reading associated digits, a calibration free setup can be realized unlike conventional methods/approaches and systems which are limited/restricted to specific set-up.

At step 222 of the method of the present disclosure, the one or more hardware processors 104 identify a liquid level value based on the set of correct values and a position of the liquid level identifier. The liquid level value is identified based on an interpolation relation of the set of correct values and the position of the liquid level identifier.

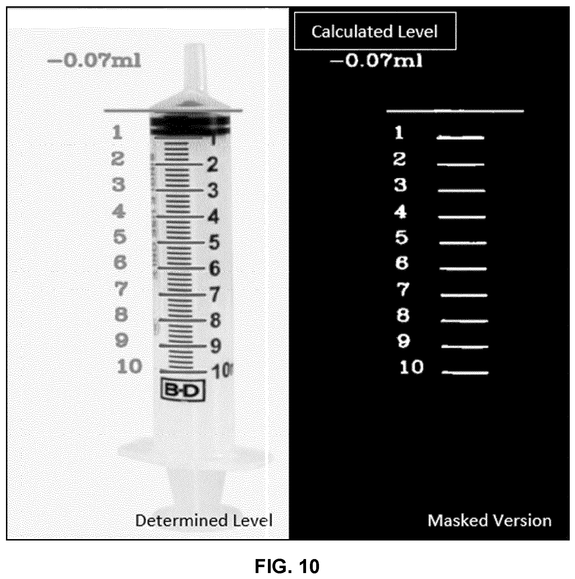

Once all the level markers (e.g., say major markers) are associated with corresponding level values (e.g., say correct values) and correct coordinates for each of those levels are also obtained, a linear relationship is determined between any position in the segmented image/pre-processed image to the indicative level. Now, the liquid level indicator/identifier (plug contour) position is already known and separated earlier based on its size, and its position is also known. This information can be converted to the liquid level value using established interpolation relation. For example, if the linear relationship of position and value comes out to be y = 0.10*x + 2, then for a plunger position (x) is 50 (refers to pixel location), the value of liquid level would be 7 ml (7 milliliter). FIG. 10, with reference to FIGS. 1 through 9, depicts a calculated value of liquid level based on a position of the liquid level identifier (e.g., plug position) in the container, in accordance with an embodiment of the present disclosure. It is to be understood by a person having ordinary skill in the art or person skilled in the art that not all the time the system 100 is required to perform autocorrection. It may so happen in some scenarios that the integer values as identified by the OCR technique may be correctly identified and thus the autocorrection technique may or may not be invoked for execution. Even though if the autocorrection technique is invoked and if the system 100 determines that the integer values are correct, then the autocorrection technique may be same as that of the OCR technique output. Hence, the liquid level value identification may be based on (i) the OCR technique (output) without actually performing autocorrection and (ii) the position of the liquid level identifier.

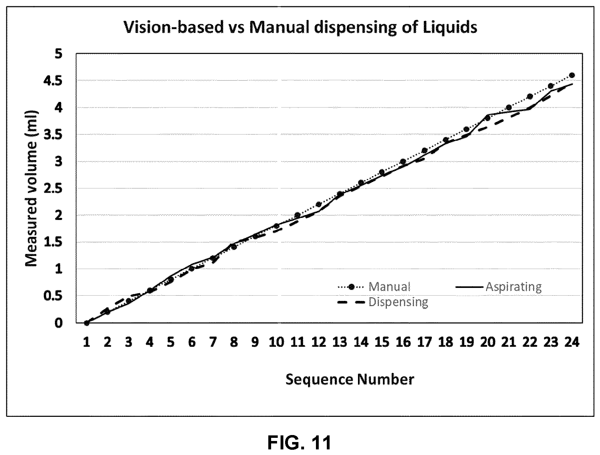

For cross-validation of manual measurements of syringe levels corresponding to each minor and major level markers made, corresponding vision-based reading was noted down as shown in FIG. 11. More specifically, FIG. 11, with reference to FIGS. 1 through 10, depicts a graphical representation illustrating a comparison for reading from manual versus vision-based measurement of syringe plug, in accordance with an embodiment of the present disclosure. The exercise was carried out for both forward and backward movement (downwards and upwards plunger movement) of the syringe plunger. FIG. 11 shows all 3 plots - manual reading, computer vision-based reading while dispensing and vision-based reading while aspirating. As can be seen from FIG. 11, vision-based readings/measurements are very close to what a human can measure. Thus, it can be concluded that a vision-based measurement of the liquid level inside a container (e.g., such as a syringe) is feasible as demonstrated.

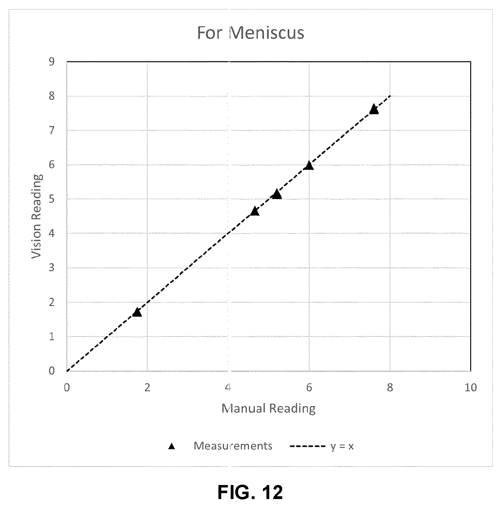

Another set of experiments were also carried out for the liquid level measurement in a measuring cylinder. The liquid level was measured based on the liquid surface meniscus positions (e.g., refer FIG. 6B). Several different images of various liquid levels in the measuring cylinder were analyzed by both manual and the developed vision-based methodologies (not shown in FIGS.). The comparison of liquid meniscus level is presented in FIG. 12. More specifically, FIG. 12, with reference to FIGS. 1 through 11, depicts a graphical representation illustrating a comparison for manual versus vision-based measurement of liquid surface meniscus, in accordance with an embodiment of the present disclosure. It can be noted that the method of the present disclosure works so well that the experimental marker points all fall on the expected $y = x$ graph line for the corresponding X and Y axes of FIG. 12.

As mentioned above, to get the reading the scale needs to be estimated/sensed, so that at what position in the frame what is the level value. For getting the scale, all major marker's locations are located in the frame, because only these major markers have values written in digits corresponding to them. To identify the major markers, all the contours present in the frame are identified and the linear ones are filtered using R2 minimization and aspect ratio feature based classification. After this only linear contours (both major and minor) are left in the list. To classify these linear markers further into the groups of major and minor markers, their lengths were calculated and arranged in the pre-defined order (e.g., decreasing order). After this, subsequent jump in the lengths was calculated moving from top to bottom and when a jump of more than p% (e.g., p=15%) was detected a separate group was made. This resulted in two groups, one having the major markers and the other having the minor markers. To read the values corresponding to major markers the system 100 implemented the OCR technique. To prevent the digit from being associated with a wrong/incorrect marker, the classification of major and minor markers is performed by the system 100 and method of the present disclosure, so that the value gets associated with only the major markers even when it is at some offset to the major marker. In some cases, the level numbers could be closer to a minor marker than a major marker, that should be detected and averted from the further analysis by the system 100 and method of the present disclosure. After reading these digits corresponding to each markers, location of each marker and the value of that marker (digit read using the OCR technique) is known. This data can be viewed as a point (x, y) representing (location, value). The outlier(s) (if any) - in this case 4-5 points, are further identified and corrected accordingly. After correction of these 4-5 points, a linear relation ($y = slope*x + offset$) of location and value is determined (i.e., value of 'slope' and 'offset' are determined). Using this relation, the system 100 and the method found the value (y_plug) for the liquid level indicator (plug, location x_plug of which was found separately).

The written description describes the subject matter herein to enable any person skilled in the art to make and use the embodiments. The scope of the subject matter embodiments is defined by the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1.  A processor implemented method, comprising:

    receiving, via one or more hardware processors (104), a Red Green Blue, RGB, image of a liquid container having a measuring scale from a video capturing device (202);
    pre-processing, via the one or more hardware processors (104), the RGB image to obtain a pre-processed image (204);
    performing, via the one or more hardware processors (104), a color-based image segmentation on the pre-processed image based on a range of pixel values comprised therein to obtain a segmented image (206);
    analyzing, via the one or more hardware processors (104), one or more edges of the segmented image to obtain one or more closed contours with one or more associated properties (208);
    identifying, via the one or more hardware processors (104), a liquid level identifier in the segmented image based on the one or more closed contours with the one or more associated properties (210), wherein the liquid level identifier is at least one of a rubber plug and a meniscus, and wherein identifying the liquid level identifier comprises performing one of a plug check and a meniscus check, using a pixel bound technique on the one or more closed contours;
    fitting, via the one or more hardware processors (104), a regression-based straight line through one or more coordinates of the one or more closed contours to obtain a set of linear features, and a set of non-linear features (212);
    arranging, via the one or more hardware processors (104), each linear feature amongst the set of linear features in a pre-defined order and calculating a length between each linear feature and a subsequent linear feature (214);
    obtaining, via the one or more hardware processors (104), a first set of markers and a second set of markers based on the calculated length (216), wherein the first set of markers and the second set of markers are determined as major markers and minor markers, respectively, using a relative classification technique based on the calculated length;
    identifying, by using an Optical Character Recognition, OCR, technique via the one or more hardware processors (104), an integer value pertaining to each marker from the first set of markers based on at least one of the set of non-linear features and the second set of markers to obtain a set of integer values (218);
    autocorrecting, via the one or more hardware processors (104), at least a subset of the set of integer values to obtain a set of correct values for the first set of markers (220), wherein the step of autocorrecting at least the subset of the set of integer values comprises:

        forming one or more combinations of the set of integer values, wherein the one or more combinations include a list of possible combinations of data points, each data point representing a position of a linear feature and a value of the linear feature, wherein each index of the first set of markers associated with the one or more combinations represent a data point, and wherein the slope is calculated for each pair of data points using formula $\{(y2 - y1)/(x2 - x1)\}$ and rounded off with $(x1, y1)$ and $(x2, y2)$ representing a pair of data points,
        calculating a slope for each combination amongst the one or more combinations, wherein one or more coordinates of the first set of markers and the integer value pertaining to each marker from the first set of markers are read and converted into one or more pairs,
        determining number of combinations having a matching slope to obtain the set of correct values,
        calculating an offset of a linear relationship of the set of correct values associated with the first set of markers, wherein the linear relationship of the set of correct values is determined by obtaining a value for each marker position of the first set of markers and determining a relation between each marker position and the obtained value, and wherein the determined relation is used to directly determine volume reading corresponding to the liquid level indicator, and
        determining a correct value for an incorrect value being identified based on the calculated offset and the linear relationship of the set of correct values associated with the first set of markers; and

identifying, via the one or more hardware processors (104), a liquid level value based on the set of correct values and a position of the liquid level identifier (222).

2. The processor implemented method as claimed in claim 1, wherein the liquid level value is identified based on an interpolation relation of the set of correct values and the position of the liquid level identifier.

3. A system (100), comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

receive a Red Green Blue (RGB) image of a liquid container having a measuring scale from a video capturing device;
pre-process the RGB image to obtain a pre-processed image;
perform a color-based image segmentation on the pre-processed image based on a range of pixel values comprised therein to obtain a segmented image;
analyze one or more edges of the segmented image to obtain one or more closed contours with one or more associated properties;
identify a liquid level identifier in the segmented image based on the one or more closed contours with the one or more associated properties, wherein the liquid level identifier is at least one of a rubber plug and a meniscus, and wherein identifying the liquid level identifier comprises performing one of a plug check and a meniscus check, using a pixel bound technique on the one or more closed contours;
fit a regression-based straight line through one or more coordinates of the one or more closed contours to obtain a set of linear features, and a set of non-linear features;
arrange each linear feature amongst the set of linear features in a pre-defined order and calculate a length between each linear feature and a subsequent linear feature;
obtain a first set of markers and a second set of markers based on the calculated length, wherein the first set of markers and the second set of markers are determined as major markers and minor markers, respectively, using a relative classification technique based on the calculated length;
identify, by using an Optical Character Recognition (OCR) technique, an integer value pertaining to each marker from the first set of markers based on at least one of the set of non-linear features and the second set of markers to obtain a set of integer values;
autocorrect at least a subset of the set of integer values to obtain a set of correct values for the first set of markers, wherein the at least the subset of the set of integer values are autocorrected by:

forming one or more combinations of the set of integer values, wherein the one or more combinations include a list of possible combinations of data points, each data point representing a position of a linear feature and a value of the linear feature, wherein each index of the first set of markers associated with the one or more combinations represent a data point, and wherein the slope is calculated for each pair of data points using formula $\{(y2 - y1)/(x2 - x1)\}$ and rounded off with (x1, y1) and (x2, y2) representing a pair of data points,
calculating a slope for each combination amongst the one or more combinations, wherein one or more coordinates of the first set of markers and the integer value pertaining to each marker from the first set of markers are read and converted into one or more pairs,
determining number of combinations having a matching slope to obtain the set of correct values,
calculating an offset of a linear relationship of the set of correct values associated with the first set of markers, wherein the linear relationship of the set of correct values is determined by obtaining a value for each marker position of the first set of markers and determining a relation between each marker position and the obtained value, and wherein the determined relation is used to directly determine volume reading corresponding to the liquid level indicator, and
determining a correct value for an incorrect value being identified based on the calculated offset and the linear relationship of the set of correct values associated with the first set of markers; and

identify a liquid level value based on the set of correct values and a position of the liquid level identifier.

4. The system (100) as claimed in claim 3, wherein the liquid level value is identified based on an interpolation relation of the set of correct values and the position of the liquid level identifier.

5. One or more non-transitory machine-readable information storage mediums (102) comprising one or more instructions which when executed by one or more hardware processors (104) cause:

   receiving a Red Green Blue (RGB) image of a liquid container having a measuring scale from a video capturing device;

   pre-processing the RGB image to obtain a pre-processed image;

   performing a color-based image segmentation on the pre-processed image based on a range of pixel values comprised therein to obtain a segmented image;

   analyzing one or more edges of the segmented image to obtain one or more closed contours with one or more associated properties;

   identifying a liquid level identifier in the segmented image based on the one or more closed contours with the one or more associated properties, wherein the liquid level identifier is at least one of a rubber plug and a meniscus, and wherein identifying the liquid level identifier comprises performing one of a plug check and a meniscus check, using a pixel bound technique on the one or more closed contours;

   fitting a regression-based straight line through one or more coordinates of the one or more closed contours to obtain a set of linear features, and a set of non-linear features;

   arranging each linear feature amongst the set of linear features in a pre-defined order and calculating a length between each linear feature and a subsequent linear feature;

   obtaining a first set of markers and a second set of markers based on the calculated length, wherein the first set of markers and the second set of markers are determined as major markers and minor markers, respectively, using a relative classification technique based on the calculated length;

   identifying, by using an Optical Character Recognition (OCR) technique, an integer value pertaining to each marker from the first set of markers based on at least one of the set of non-linear features and the second set of markers to obtain a set of integer values;

   autocorrecting at least a subset of the set of integer values to obtain a set of correct values for the first set of markers, wherein the step of autocorrecting at least the subset of the set of integer values comprises:

   forming one or more combinations of the set of integer values, wherein the one or more combinations include a list of possible combinations of data points, each data point representing a position of a linear feature and a value of the linear feature, wherein each index of the first set of markers associated with the one or more combinations represent a data point, and wherein the slope is calculated for each pair of data points using formula $\{(y2 - y1)/(x2 - x1)\}$ and rounded off with (x1, y1) and (x2, y2) representing a pair of data points, calculating a slope for each combination amongst the one or more combinations, wherein one or more coordinates of the first set of markers and the integer value pertaining to each marker from the first set of markers are read and converted into one or more pairs,

   determining number of combinations having a matching slope to obtain the set of correct values,

   calculating an offset of a linear relationship of the set of correct values associated with the first set of markers, wherein the linear relationship of the set of correct values is determined by obtaining a value for each marker position of the first set of markers and determining a relation between each marker position and the obtained value, and wherein the determined relation is used to directly determine volume reading corresponding to the liquid level indicator, and

   determining a correct value for an incorrect value being identified based on the calculated offset and the linear relationship of the set of correct values associated with the first set of markers; and

   identifying a liquid level value based on the set of correct values and a position of the liquid level identifier.

6. The one or more non-transitory machine-readable information storage mediums (102) as claimed in claim 5, wherein the liquid level value is identified based on an interpolation relation of the set of correct values and the position of the liquid level identifier.

**Patentansprüche**

1. Prozessorimplementiertes Verfahren, umfassend:

Empfangen, über einen oder mehrere Hardwareprozessoren (104), eines Rot-Grün-Blau-, RGB-, Bildes eines Flüssigkeitsbehälters mit einer Messskala von einer Videoerfassungsvorrichtung (202);

Vorverarbeiten, über den einen oder die mehreren Hardwareprozessoren (104), des RGB-Bildes, um ein vorverarbeitetes Bild (204) zu erhalten;

Durchführen, über den einen oder die mehreren Hardwareprozessoren (104), einer farbbasierten Bildsegmentierung an dem vorverarbeiteten Bild basierend auf einem Bereich von darin enthaltenen Pixelwerten, um ein segmentiertes Bild (206) zu erhalten;

Analysieren, über den einen oder die mehreren Hardwareprozessoren (104), einer oder mehrerer Kanten des segmentierten Bildes, um eine oder mehrere geschlossene Konturen mit einer oder mehreren assoziierten Eigenschaften (208) zu erhalten;

Identifizieren, über den einen oder die mehreren Hardwareprozessoren (104), einer Flüssigkeitsniveaukennung in dem segmentierten Bild basierend auf der einen oder den mehreren geschlossenen Konturen mit der einen oder den mehreren assoziierten Eigenschaften (210), wobei die Flüssigkeitsniveaukennung mindestens eines von einem Gummistopfen und einem Meniskus ist, und wobei das Identifizieren der Flüssigkeitsniveaukennung das Durchführen eines von einer Stopfenprüfung und einer Meniskusprüfung unter Verwendung einer Pixelbegrenzungstechnik an der einen oder den mehreren geschlossenen Konturen umfasst;

Anpassen, über den einen oder die mehreren Hardwareprozessoren (104), einer regressionsbasierten geraden Linie durch eine oder mehrere Koordinaten der einen oder der mehreren geschlossenen Konturen, um einen Satz von linearen Merkmalen und einen Satz von nichtlinearen Merkmalen (212) zu erhalten;

Anordnen, über den einen oder die mehreren Hardwareprozessoren (104), jedes linearen Merkmals aus dem Satz von linearen Merkmalen in einer vordefinierten Reihenfolge und Berechnen einer Länge zwischen jedem linearen Merkmal und einem nachfolgenden linearen Merkmal (214);

Erhalten, über den einen oder die mehreren Hardwareprozessoren (104), eines ersten Satzes von Markierungen und eines zweiten Satzes von Markierungen basierend auf der berechneten Länge (216), wobei der erste Satz von Markierungen und der zweite Satz von Markierungen unter Verwendung einer relativen Klassifizierungstechnik basierend auf der berechneten Länge als Hauptmarkierungen bzw. Nebenmarkierungen bestimmt werden;

Identifizieren, unter Verwendung einer optischen Zeichenerkennungstechnik, OCR-Technik, über den einen oder die mehreren Hardwareprozessoren (104), eines ganzzahligen Werts, der sich auf jede Markierung aus dem ersten Satz von Markierungen bezieht, basierend auf mindestens einem von dem Satz von nichtlinearen Merkmalen und dem zweiten Satz von Markierungen, um einen Satz von ganzzahligen Werten (218) zu erhalten;

Autokorrigieren, über den einen oder die mehreren Hardwareprozessoren (104), mindestens einer Teilmenge des Satzes von ganzzahligen Werten, um einen Satz von korrekten Werten für den ersten Satz von Markierungen (220) zu erhalten, wobei der Schritt des Autokorrigierens mindestens der Teilmenge des Satzes von ganzzahligen Werten umfasst:

Bilden einer oder mehrerer Kombinationen des Satzes von ganzzahligen Werten, wobei die eine oder die mehreren Kombinationen eine Liste von möglichen Kombinationen von Datenpunkten beinhalten, wobei jeder Datenpunkt eine Position eines linearen Merkmals und einen Wert des linearen Merkmals darstellt, wobei jeder Index des ersten Satzes von Markierungen, der mit der einen oder den mehreren Kombinationen assoziiert ist, einen Datenpunkt darstellt, und wobei die Steigung für jedes Paar von Datenpunkten unter Verwendung der Formel $\{(y2 - y1)/(x2 - x1)\}$ berechnet und mit (x1, y1) und (x2, y2), die ein Paar von Datenpunkten darstellen, abgerundet wird,

Berechnen einer Steigung für jede Kombination unter der einen oder den mehreren Kombinationen, wobei eine oder mehrere Koordinaten des ersten Satzes von Markierungen und der ganzzahlige Wert, der sich auf jede Markierung aus dem ersten Satz von Markierungen bezieht, gelesen und in ein oder mehrere Paare umgewandelt werden,

Bestimmen der Anzahl von Kombinationen mit einer passenden Steigung, um den Satz von korrekten Werten zu erhalten,

Berechnen eines Versatzes einer linearen Beziehung des Satzes von korrekten Werten, der mit dem ersten Satz von Markierungen assoziiert ist, wobei die lineare Beziehung des Satzes von korrekten Werten durch Erhalten eines Werts für jede Markierungsposition des ersten Satzes von Markierungen und Bestimmen einer Beziehung zwischen jeder Markierungsposition und dem erhaltenen Wert bestimmt wird, und wobei die bestimmte Beziehung verwendet wird, um direkt die Volumenablesung zu bestimmen, die dem Flüssigkeitsstandsindikator entspricht, und

Bestimmen eines korrekten Werts für einen falschen Wert, der basierend auf dem berechneten Versatz und der linearen Beziehung des Satzes von korrekten Werten, der mit dem ersten Satz von Markierungen assoziiert ist, identifiziert wird; und

Identifizieren, über den einen oder die mehreren Hardwareprozessoren (104), eines Flüssigkeitsstandswerts basierend auf dem Satz von korrekten Werten und einer Position der Flüssigkeitsstandskennung (222).

2. Prozessorimplementiertes Verfahren nach Anspruch 1, wobei der Flüssigkeitsstandwert basierend auf einer Interpolationsbeziehung des Satzes von korrekten Werten und der Position der Flüssigkeitsstandskennung identifiziert wird.

3. System (100), umfassend:

einen Speicher (102), der Anweisungen speichert;
eine oder mehrere Kommunikationsschnittstellen (106); und
einen oder mehrere Hardwareprozessoren (104), die mit dem Speicher (102) über die eine oder die mehreren Kommunikationsschnittstellen (106) gekoppelt sind, wobei der eine oder die mehreren Hardwareprozessoren (104) durch die Anweisungen konfiguriert sind zum:

Empfangen eines Rot-Grün-Blau- (RGB-) Bildes eines Flüssigkeitsbehälters mit einer Messskala von einer Videoerfassungsvorrichtung;
Vorverarbeiten des RGB-Bildes, um ein vorverarbeitetes Bild zu erhalten;
Durchführen einer farbbasierten Bildsegmentierung an dem vorverarbeiteten Bild basierend auf einem Bereich von darin enthaltenen Pixelwerten, um ein segmentiertes Bild zu erhalten;
Analysieren einer oder mehrerer Kanten des segmentierten Bildes, um eine oder mehrere geschlossene Konturen mit einer oder mehreren assoziierten Eigenschaften zu erhalten;
Identifizieren einer Flüssigkeitsniveaukennung in dem segmentierten Bild basierend auf der einen oder den mehreren geschlossenen Konturen mit der einen oder den mehreren assoziierten Eigenschaften, wobei die Flüssigkeitsniveaukennung mindestens eines von einem Gummistopfen und einem Meniskus ist, und wobei das Identifizieren der Flüssigkeitsniveaukennung das Durchführen eines von einer Stopfenprüfung und einer Meniskusprüfung unter Verwendung einer Pixelbegrenzungstechnik an der einen oder den mehreren geschlossenen Konturen umfasst;
Anpassen einer regressionsbasierten geraden Linie durch eine oder mehrere Koordinaten der einen oder der mehreren geschlossenen Konturen, um einen Satz von linearen Merkmalen und einen Satz von nichtlinearen Merkmalen zu erhalten;
Anordnen jedes linearen Merkmals aus dem Satz von linearen Merkmalen in einer vordefinierten Reihenfolge und Berechnen einer Länge zwischen jedem linearen Merkmal und einem nachfolgenden linearen Merkmal;
Erhalten eines ersten Satzes von Markierungen und eines zweiten Satzes von Markierungen basierend auf der berechneten Länge, wobei der erste Satz von Markierungen und der zweite Satz von Markierungen unter Verwendung einer relativen Klassifizierungstechnik basierend auf der berechneten Länge als Hauptmarkierungen bzw. Nebenmarkierungen bestimmt werden;
Identifizieren, unter Verwendung einer optischen Zeichenerkennungstechnik (OCR-Technik), eines ganzzahligen Werts, der sich auf jede Markierung aus dem ersten Satz von Markierungen bezieht, basierend auf mindestens einem von dem Satz von nichtlinearen Merkmalen und dem zweiten Satz von Markierungen, um einen Satz von ganzzahligen Werten zu erhalten;
Autokorrigieren mindestens einer Teilmenge des Satzes von ganzzahligen Werten, um einen Satz von korrekten Werten für den ersten Satz von Markierungen zu erhalten, wobei die mindestens eine Teilmenge des Satzes von ganzzahligen Werten autokorrigiert wird durch:

Bilden einer oder mehrerer Kombinationen des Satzes von ganzzahligen Werten, wobei die eine oder die mehreren Kombinationen eine Liste von möglichen Kombinationen von Datenpunkten beinhalten, wobei jeder Datenpunkt eine Position eines linearen Merkmals und einen Wert des linearen Merkmals darstellt, wobei jeder Index des ersten Satzes von Markierungen, der mit der einen oder den mehreren Kombinationen assoziiert ist, einen Datenpunkt darstellt, und wobei die Steigung für jedes Paar von Datenpunkten unter Verwendung der Formel $\{(y2 - y1)/(x2 - x1)\}$ berechnet und mit $(x1, y1)$ und $(x2, y2)$, die ein Paar von Datenpunkten darstellen, abgerundet wird,
Berechnen einer Steigung für jede Kombination unter der einen oder den mehreren Kombinationen, wobei eine oder mehrere Koordinaten des ersten Satzes von Markierungen und der ganzzahlige Wert, der sich auf jede Markierung aus dem ersten Satz von Markierungen bezieht, gelesen und in ein oder mehrere Paare umgewandelt werden,
Bestimmen der Anzahl von Kombinationen mit einer passenden Steigung, um den Satz von korrekten Werten zu erhalten,

Berechnen eines Versatzes einer linearen Beziehung des Satzes von korrekten Werten, der mit dem ersten Satz von Markierungen assoziiert ist, wobei die lineare Beziehung des Satzes von korrekten Werten durch Erhalten eines Werts für jede Markierungsposition des ersten Satzes von Markierungen und Bestimmen einer Beziehung zwischen jeder Markierungsposition und dem erhaltenen Wert bestimmt wird, und wobei die bestimmte Beziehung verwendet wird, um direkt die Volumenablesung zu bestimmen, die dem Flüssigkeitsstandsindikator entspricht, und

Bestimmen eines korrekten Werts für einen falschen Wert, der basierend auf dem berechneten Versatz und der linearen Beziehung des Satzes von korrekten Werten, der mit dem ersten Satz von Markierungen assoziiert ist, identifiziert wird; und

Identifizieren eines Flüssigkeitsstandswerts basierend auf dem Satz von korrekten Werten und einer Position der Flüssigkeitsstandskennung.

4. System (100) nach Anspruch 3, wobei der Flüssigkeitsstandswert basierend auf einer Interpolationsbeziehung des Satzes von korrekten Werten und der Position der Flüssigkeitsstandskennung identifiziert wird.

5. Ein oder mehrere nichtflüchtige maschinenlesbare Informationsspeichermedien (102), umfassend eine oder mehrere Anweisungen, die, wenn sie von einem oder mehreren Hardwareprozessoren (104) ausgeführt werden, bewirken:

Empfangen eines Rot-Grün-Blau- (RGB-) Bildes eines Flüssigkeitsbehälters mit einer Messskala von einer Videoerfassungsvorrichtung;

Vorverarbeiten des RGB-Bildes, um ein vorverarbeitetes Bild zu erhalten;

Durchführen einer farbbasierten Bildsegmentierung an dem vorverarbeiteten Bild basierend auf einem Bereich von darin enthaltenen Pixelwerten, um ein segmentiertes Bild zu erhalten;

Analysieren einer oder mehrerer Kanten des segmentierten Bildes, um eine oder mehrere geschlossene Konturen mit einer oder mehreren assoziierten Eigenschaften zu erhalten;

Identifizieren einer Flüssigkeitsniveaukennung in dem segmentierten Bild basierend auf der einen oder den mehreren geschlossenen Konturen mit der einen oder den mehreren assoziierten Eigenschaften, wobei die Flüssigkeitsniveaukennung mindestens eines von einem Gummistopfen und einem Meniskus ist, und wobei das Identifizieren der Flüssigkeitsniveaukennung das Durchführen eines von einer Stopfenprüfung und einer Meniskusprüfung unter Verwendung einer Pixelbegrenzungstechnik an der einen oder den mehreren geschlossenen Konturen umfasst;

Anpassen einer regressionsbasierten geraden Linie durch eine oder mehrere Koordinaten der einen oder der mehreren geschlossenen Konturen, um einen Satz von linearen Merkmalen und einen Satz von nichtlinearen Merkmalen zu erhalten;

Anordnen jedes linearen Merkmals aus dem Satz von linearen Merkmalen in einer vordefinierten Reihenfolge und Berechnen einer Länge zwischen jedem linearen Merkmal und einem nachfolgenden linearen Merkmal;

Erhalten eines ersten Satzes von Markierungen und eines zweiten Satzes von Markierungen basierend auf der berechneten Länge, wobei der erste Satz von Markierungen und der zweite Satz von Markierungen unter Verwendung einer relativen Klassifizierungstechnik basierend auf der berechneten Länge als Hauptmarkierungen bzw. Nebenmarkierungen bestimmt werden;

Identifizieren, unter Verwendung einer optischen Zeichenerkennungstechnik (OCR-Technik), eines ganzzahligen Werts, der sich auf jede Markierung aus dem ersten Satz von Markierungen bezieht, basierend auf mindestens einem von dem Satz von nichtlinearen Merkmalen und dem zweiten Satz von Markierungen, um einen Satz von ganzzahligen Werten zu erhalten;

Autokorrigieren mindestens einer Teilmenge des Satzes von ganzzahligen Werten, um einen Satz von korrekten Werten für den ersten Satz von Markierungen zu erhalten, wobei der Schritt des Autokorrigierens mindestens der Teilmenge des Satzes von ganzzahligen Werten umfasst:

Bilden einer oder mehrerer Kombinationen des Satzes von ganzzahligen Werten, wobei die eine oder die mehreren Kombinationen eine Liste von möglichen Kombinationen von Datenpunkten beinhalten, wobei jeder Datenpunkt eine Position eines linearen Merkmals und einen Wert des linearen Merkmals darstellt, wobei jeder Index des ersten Satzes von Markierungen, der mit der einen oder den mehreren Kombinationen assoziiert ist, einen Datenpunkt darstellt, und wobei die Steigung für jedes Paar von Datenpunkten unter Verwendung der Formel $\{(y2 - y1)/(x2 - x1)\}$ berechnet und mit (x1, y1) und (x2, y2), die ein Paar von Datenpunkten darstellen, abgerundet wird,

Berechnen einer Steigung für jede Kombination unter der einen oder den mehreren Kombinationen, wobei eine oder mehrere Koordinaten des ersten Satzes von Markierungen und der ganzzahlige Wert, der sich auf jede Markierung aus dem ersten Satz von Markierungen bezieht, gelesen und in ein oder mehrere Paare umgewandelt werden,

Bestimmen der Anzahl von Kombinationen mit einer passenden Steigung, um den Satz von korrekten Werten zu erhalten,

Berechnen eines Versatzes einer linearen Beziehung des Satzes von korrekten Werten, der mit dem ersten Satz von Markierungen assoziiert ist, wobei die lineare Beziehung des Satzes von korrekten Werten durch Erhalten eines Werts für jede Markierungsposition des ersten Satzes von Markierungen und Bestimmen einer Beziehung zwischen jeder Markierungsposition und dem erhaltenen Wert bestimmt wird, und wobei die bestimmte Beziehung verwendet wird, um direkt die Volumenablesung zu bestimmen, die dem Flüssigkeitsstandsindikator entspricht, und

Bestimmen eines korrekten Werts für einen falschen Wert, der basierend auf dem berechneten Versatz und der linearen Beziehung des Satzes von korrekten Werten, der mit dem ersten Satz von Markierungen assoziiert ist, identifiziert wird; und

Identifizieren eines Flüssigkeitsstandswerts basierend auf dem Satz von korrekten Werten und einer Position der Flüssigkeitsstandskennung.

**6.** Ein oder mehrere nichtflüchtige maschinenlesbare Informationsspeichermedien (102) nach Anspruch 5, wobei der Flüssigkeitsstandswert basierend auf einer Interpolationsbeziehung des Satzes von korrekten Werten und der Position der Flüssigkeitsstandskennung identifiziert wird.

## Revendications

**1.** Procédé mis en oeuvre par processeur, comprenant :

la réception, via un ou plusieurs processeurs matériels (104), d'une image rouge-vert-bleu, RGB, d'un récipient de liquide ayant une échelle de mesure à partir d'un dispositif de capture vidéo (202) ;

le prétraitement, via les un ou plusieurs processeurs matériels (104), de l'image RGB pour obtenir une image prétraitée (204) ;

la réalisation, via les un ou plusieurs processeurs matériels (104), d'une segmentation d'image sur la base des couleurs sur l'image prétraitée sur la base d'une plage de valeurs de pixels comprise dans celle-ci pour obtenir une image segmentée (206) ;

l'analyse, via les un ou plusieurs processeurs matériels (104), d'un ou plusieurs bords de l'image segmentée pour obtenir un ou plusieurs contours fermés avec une ou plusieurs propriétés associées (208) ;

l'identification, via les un ou plusieurs processeurs matériels (104), d'un identifiant de niveau de liquide dans l'image segmentée sur la base des un ou plusieurs contours fermés avec les une ou plusieurs propriétés associées (210), dans lequel l'identifiant de niveau de liquide est au moins l'un d'un bouchon en caoutchouc et d'un ménisque, et dans lequel l'identification de l'identifiant de niveau de liquide comprend la réalisation de l'un d'un contrôle de bouchon et d'un contrôle de ménisque, en utilisant une technique de liaison de pixels sur les un ou plusieurs contours fermés ;

l'ajustement, via les un ou plusieurs processeurs matériels (104), d'une ligne droite basée sur une régression à travers une ou plusieurs coordonnées des un ou plusieurs contours fermés pour obtenir un ensemble de caractéristiques linéaires, et un ensemble de caractéristiques non linéaires (212) ;

l'agencement, via les un ou plusieurs processeurs matériels (104), de chaque caractéristique linéaire parmi l'ensemble de caractéristiques linéaires dans un ordre prédéfini et le calcul d'une longueur entre chaque caractéristique linéaire et une caractéristique linéaire suivante (214) ;

l'obtention, via les un ou plusieurs processeurs matériels (104), d'un premier ensemble de marqueurs et d'un second ensemble de marqueurs sur la base de la longueur calculée (216), dans lequel le premier ensemble de marqueurs et le second ensemble de marqueurs sont déterminés en tant que marqueurs majeurs et marqueurs mineurs, respectivement, en utilisant une technique de classification relative sur la base de la longueur calculée ;

l'identification, en utilisant une technique de reconnaissance optique de caractères, OCR, via les un ou plusieurs processeurs matériels (104), d'une valeur entière se rapportant à chaque marqueur du premier ensemble de marqueurs sur la base d'au moins l'un de l'ensemble de caractéristiques non linéaires et du second ensemble de marqueurs pour obtenir un ensemble de valeurs entières (218) ;

l'autocorrection, via les un ou plusieurs processeurs matériels (104), d'au moins un sous-ensemble de l'ensemble de valeurs entières pour obtenir un ensemble de valeurs correctes pour le premier ensemble de marqueurs (220), dans lequel l'étape d'autocorrection d'au moins le sous-ensemble de l'ensemble de valeurs entières comprend :

la formation d'une ou plusieurs combinaisons de l'ensemble de valeurs entières, dans lequel les une ou plusieurs combinaisons incluent une liste de combinaisons possibles de points de données, chaque point de données représentant une position d'une caractéristique linéaire et une valeur de la caractéristique linéaire, dans lequel chaque indice du premier ensemble de marqueurs associé aux une ou plusieurs combinaisons représente un point de données, et dans lequel la pente est calculée pour chaque paire de points de données en utilisant la formule $\{(y2 - y1)/(x2 - x1)\}$ et arrondie avec $(x1, y1)$ et $(x2, y2)$ représentant une paire de points de données,

le calcul d'une pente pour chaque combinaison parmi les une ou plusieurs combinaisons, dans lequel une ou plusieurs coordonnées du premier ensemble de marqueurs et la valeur entière se rapportant à chaque marqueur du premier ensemble de marqueurs sont lues et converties en une ou plusieurs paires,

la détermination d'un nombre de combinaisons ayant une pente correspondante pour obtenir l'ensemble de valeurs correctes,

le calcul d'un décalage d'une relation linéaire de l'ensemble de valeurs correctes associé au premier ensemble de marqueurs, dans lequel la relation linéaire de l'ensemble de valeurs correctes est déterminée en obtenant une valeur pour chaque position de marqueur du premier ensemble de marqueurs et en déterminant une relation entre chaque position de marqueur et la valeur obtenue, et dans lequel la relation déterminée est utilisée pour déterminer directement une lecture de volume correspondant à l'indicateur de niveau de liquide, et

la détermination d'une valeur correcte pour une valeur incorrecte qui est identifiée sur la base du décalage calculé et de la relation linéaire de l'ensemble de valeurs correctes associé au premier ensemble de marqueurs ; et

l'identification, via les un ou plusieurs processeurs matériels (104), d'une valeur de niveau de liquide sur la base de l'ensemble de valeurs correctes et d'une position de l'identifiant de niveau de liquide (222).

2. Procédé mis en oeuvre par processeur selon la revendication 1, dans lequel la valeur de niveau de liquide est identifiée sur la base d'une relation d'interpolation de l'ensemble de valeurs correctes et de la position de l'identifiant de niveau de liquide.

3. Système (100), comprenant :

une mémoire (102) stockant des instructions ;
une ou plusieurs interfaces de communication (106) ; et
un ou plusieurs processeurs matériels (104) couplés à la mémoire (102) via les une ou plusieurs interfaces de communication (106), dans lequel les un ou plusieurs processeurs matériels (104) sont configurés par les instructions pour :

recevoir une image rouge-vert-bleu (RGB) d'un récipient de liquide ayant une échelle de mesure à partir d'un dispositif de capture vidéo ;
prétraiter l'image RGB pour obtenir une image prétraitée ;
réaliser une segmentation d'image sur la base des couleurs sur l'image prétraitée sur la base d'une plage de valeurs de pixels comprise dans celle-ci pour obtenir une image segmentée ;
analyser un ou plusieurs bords de l'image segmentée pour obtenir un ou plusieurs contours fermés avec une ou plusieurs propriétés associées ;
identifier un identifiant de niveau de liquide dans l'image segmentée sur la base des un ou plusieurs contours fermés avec les une ou plusieurs propriétés associées, dans lequel l'identifiant de niveau de liquide est au moins l'un d'un bouchon en caoutchouc et d'un ménisque, et dans lequel l'identification de l'identifiant de niveau de liquide comprend la réalisation de l'un d'un contrôle de bouchon et d'un contrôle de ménisque, en utilisant une technique de liaison de pixels sur les un ou plusieurs contours fermés ;
ajuster une ligne droite basée sur une régression à travers une ou plusieurs coordonnées des un ou plusieurs contours fermés pour obtenir un ensemble de caractéristiques linéaires, et un ensemble de caractéristiques non linéaires ;
agencer chaque caractéristique linéaire parmi l'ensemble de caractéristiques linéaires dans un ordre prédéfini et calculer une longueur entre chaque caractéristique linéaire et une caractéristique linéaire suivante ;

obtenir un premier ensemble de marqueurs et un second ensemble de marqueurs sur la base de la longueur calculée, dans lequel le premier ensemble de marqueurs et le second ensemble de marqueurs sont déterminés en tant que marqueurs majeurs et marqueurs mineurs, respectivement, en utilisant une technique de classification relative sur la base de la longueur calculée ;

identifier, en utilisant une technique de reconnaissance optique de caractères (OCR), une valeur entière se rapportant à chaque marqueur du premier ensemble de marqueurs sur la base d'au moins l'un de l'ensemble de caractéristiques non linéaires et du second ensemble de marqueurs pour obtenir un ensemble de valeurs entières ;

autocorriger au moins un sous-ensemble de l'ensemble de valeurs entières pour obtenir un ensemble de valeurs correctes pour le premier ensemble de marqueurs, dans lequel l'au moins le sous-ensemble de l'ensemble de valeurs entières est autocorrigé par :

la formation d'une ou plusieurs combinaisons de l'ensemble de valeurs entières, dans lequel les une ou plusieurs combinaisons incluent une liste de combinaisons possibles de points de données, chaque point de données représentant une position d'une caractéristique linéaire et une valeur de la caractéristique linéaire, dans lequel chaque indice du premier ensemble de marqueurs associé aux une ou plusieurs combinaisons représente un point de données, et dans lequel la pente est calculée pour chaque paire de points de données en utilisant la formule $\{(y2 - y1)/(x2 - x1)\}$ et arrondie avec $(x1, y1)$ et $(x2, y2)$ représentant une paire de points de données,

le calcul d'une pente pour chaque combinaison parmi les une ou plusieurs combinaisons, dans lequel une ou plusieurs coordonnées du premier ensemble de marqueurs et la valeur entière se rapportant à chaque marqueur du premier ensemble de marqueurs sont lues et converties en une ou plusieurs paires, la détermination d'un nombre de combinaisons ayant une pente correspondante pour obtenir l'ensemble de valeurs correctes,

le calcul d'un décalage d'une relation linéaire de l'ensemble de valeurs correctes associé au premier ensemble de marqueurs, dans lequel la relation linéaire de l'ensemble de valeurs correctes est déterminée en obtenant une valeur pour chaque position de marqueur du premier ensemble de marqueurs et en déterminant une relation entre chaque position de marqueur et la valeur obtenue, et dans lequel la relation déterminée est utilisée pour déterminer directement une lecture de volume correspondant à l'indicateur de niveau de liquide, et

la détermination d'une valeur correcte pour une valeur incorrecte qui est identifiée sur la base du décalage calculé et de la relation linéaire de l'ensemble de valeurs correctes associé au premier ensemble de marqueurs ; et

l'identification d'une valeur de niveau de liquide sur la base de l'ensemble de valeurs correctes et d'une position de l'identifiant de niveau de liquide.

4. Système (100) selon la revendication 3, dans lequel la valeur de niveau de liquide est identifiée sur la base d'une relation d'interpolation de l'ensemble de valeurs correctes et de la position de l'identifiant de niveau de liquide.

5. Un ou plusieurs supports de stockage d'informations lisibles par machine non transitoires (102) comprenant une ou plusieurs instructions qui, lorsqu'elles sont exécutées par un ou plusieurs processeurs matériels (104), amènent :

la réception d'une image rouge-vert-bleu (RGB) d'un récipient de liquide ayant une échelle de mesure à partir d'un dispositif de capture vidéo ;

le prétraitement de l'image RGB pour obtenir une image prétraitée ;

la réalisation d'une segmentation d'image sur la base des couleurs sur l'image prétraitée sur la base d'une plage de valeurs de pixels comprise dans celle-ci pour obtenir une image segmentée ;

l'analyse d'un ou plusieurs bords de l'image segmentée pour obtenir un ou plusieurs contours fermés avec une ou plusieurs propriétés associées ;

l'identification d'un identifiant de niveau de liquide dans l'image segmentée sur la base des un ou plusieurs contours fermés avec les une ou plusieurs propriétés associées, dans lequel l'identifiant de niveau de liquide est au moins l'un d'un bouchon en caoutchouc et d'un ménisque, et dans lequel l'identification de l'identifiant de niveau de liquide comprend la réalisation de l'un d'un contrôle de bouchon et d'un contrôle de ménisque, en utilisant une technique de liaison de pixels sur les un ou plusieurs contours fermés ;

l'ajustement d'une ligne droite basée sur une régression à travers une ou plusieurs coordonnées des un ou plusieurs contours fermés pour obtenir un ensemble de caractéristiques linéaires, et un ensemble de caractéristiques non linéaires ;

l'agencement de chaque caractéristique linéaire parmi l'ensemble de caractéristiques linéaires dans un ordre prédéfini et le calcul d'une longueur entre chaque caractéristique linéaire et une caractéristique linéaire suivante ;

l'obtention d'un premier ensemble de marqueurs et d'un second ensemble de marqueurs sur la base de la longueur calculée, dans lequel le premier ensemble de marqueurs et le second ensemble de marqueurs sont déterminés en tant que marqueurs majeurs et marqueurs mineurs, respectivement, en utilisant une technique de classification relative sur la base de la longueur calculée ;

l'identification, en utilisant une technique de reconnaissance optique de caractères (OCR), d'une valeur entière se rapportant à chaque marqueur du premier ensemble de marqueurs sur la base d'au moins l'un de l'ensemble de caractéristiques non linéaires et du second ensemble de marqueurs pour obtenir un ensemble de valeurs entières ;

l'autocorrection d'au moins un sous-ensemble de l'ensemble de valeurs entières pour obtenir un ensemble de valeurs correctes pour le premier ensemble de marqueurs, dans lequel l'étape d'autocorrection d'au moins le sous-ensemble de l'ensemble de valeurs entières comprend :

la formation d'une ou plusieurs combinaisons de l'ensemble de valeurs entières, dans lequel les une ou plusieurs combinaisons incluent une liste de combinaisons possibles de points de données, chaque point de données représentant une position d'une caractéristique linéaire et une valeur de la caractéristique linéaire, dans lequel chaque indice du premier ensemble de marqueurs associé aux une ou plusieurs combinaisons représente un point de données, et dans lequel la pente est calculée pour chaque paire de points de données en utilisant la formule $\{(y2 - y1)/(x2 - x1)\}$ et arrondie avec $(x1, y1)$ et $(x2, y2)$ représentant une paire de points de données,

le calcul d'une pente pour chaque combinaison parmi les une ou plusieurs combinaisons, dans lequel une ou plusieurs coordonnées du premier ensemble de marqueurs et la valeur entière se rapportant à chaque marqueur du premier ensemble de marqueurs sont lues et converties en une ou plusieurs paires,

la détermination d'un nombre de combinaisons ayant une pente correspondante pour obtenir l'ensemble de valeurs correctes,

le calcul d'un décalage d'une relation linéaire de l'ensemble de valeurs correctes associé au premier ensemble de marqueurs, dans lequel la relation linéaire de l'ensemble de valeurs correctes est déterminée en obtenant une valeur pour chaque position de marqueur du premier ensemble de marqueurs et en déterminant une relation entre chaque position de marqueur et la valeur obtenue, et dans lequel la relation déterminée est utilisée pour déterminer directement une lecture de volume correspondant à l'indicateur de niveau de liquide, et

la détermination d'une valeur correcte pour une valeur incorrecte qui est identifiée sur la base du décalage calculé et de la relation linéaire de l'ensemble de valeurs correctes associé au premier ensemble de marqueurs ; et

l'identification d'une valeur de niveau de liquide sur la base de l'ensemble de valeurs correctes et d'une position de l'identifiant de niveau de liquide.

6. Un ou plusieurs supports de stockage d'informations lisibles par machine non transitoires (102) selon la revendication 5, dans lesquels la valeur de niveau de liquide est identifiée sur la base d'une relation d'interpolation de l'ensemble de valeurs correctes et de la position de l'identifiant de niveau de liquide.

SYSTEM
100

MEMORY
102

DATABASE
108

HARDWARE
PROCESSOR(S)
104

INTERFACE(S)
106

**FIG. 1**

receiving a Red Green Blue (RGB) image of a liquid container having a measuring scale from a video capturing device — 202

pre-processing the RGB image to obtain a pre-processed image — 204

performing a color-based image segmentation on the pre-processed image based on a range of pixel values comprised therein to obtain a segmented image — 206

analyzing edges of the segmented image to obtain closed contours with one or more associated properties — 208

identifying a liquid level identifier in the segmented image based on the closed contours with the associated properties — 210

fitting a regression-based straight line through coordinates of the closed contours to obtain a set of linear features (SLS), and a set of non-linear features (SNLS) — 212

arranging each linear feature amongst the set of linear features in a pre-defined order and calculating a length between each linear feature and a subsequent linear feature — 214

obtaining a first set of markers (FSM) and a second set of markers (SSM) based on the calculated length — 216

identifying, by using an OCR technique, an integer value pertaining to the FSM based on at least one of the SNLS, and SSM to obtain a set of integer values — 218

autocorrecting at least a subset of the set of integer values to obtain a set of correct values for the first set of markers — 220

identifying a liquid level value based on the set of correct values and a position of the liquid level identifier — 222

**FIG. 2**

**FIG. 3**

FIG. 4

**FIG. 5**

(a)  (b)

FIG. 6

**FIG. 7A**

(a) (b)

**FIG. 7B**

**FIG. 8**

FIG. 9

**FIG. 10**

**FIG. 11**

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202321055988

**Non-patent literature cited in the description**

- **DOU GANG et al.** *Research on Water-Level Recognition Method Based on Image Processing and Convolutional Neural Networks*
- **IDO et al.** *OCR Error Correction Using Character Correction and Feature-Based Word Classification*
- **HUA CHENQUAN et al.** *Follow-Up Control and Image Recognition of Neck Level for Standard Metal Gauge*